# EUROPEAN PATENT APPLICATION

(11) **EP 3 037 387 A1**
(43) Date of publication of application: **29.06.2016**
(21) Application number: 14199912.8
(22) Date of filing: 22.12.2014
(51) Int. Cl.: C01D 7/00, C01D 7/38, C01D 7/42

(54) **Alkali metal bicarbonate particles with exceptional flowability**

(71) Applicant: Solvay SA, 1120 Bruxelles (BE)
(72) Inventor: SAVARY, David Jean Lucien, 69360 Sérézin-du-Rhône (FR)
(74) Representative: Kalhammer, Georg

(57) **Abstract**

The invention leads to powder compositions comprising alkali metal bicarbonate particles and an amino acid as additive. The invention also relates to a process for preparing alkali metal bicarbonate particles by spray-drying of an aqueous solution comprising 1 - 10 % by weight of alkali metal bicarbonate and an amino acid as additive.

## Description

### Field of the invention

The invention relates to powder compositions comprising alkali metal bicarbonate particles and an amino acid as additive. The invention also relates to a process for preparing alkali metal bicarbonate particles by spray-drying of an aqueous solution comprising 1 - 10 % by weight of alkali metal bicarbonate and an amino acid as additive.

### Prior art

Alkali metal bicarbonate particles, such as sodium bicarbonate particles and potassium bicarbonate particles, are known in the art. These products have many properties which make them interesting and extensively used in several technical fields, such as pharmaceutical industry, the feed and food industry, in detergents and in the treatment of non-ferrous metals.

The most common way to manufacture bicarbonate particles is crystallization by carbonization with carbon dioxide of a solution of the corresponding alkali metal (sodium or potassium carbonate for example) or a solution of the hydroxide of the corresponding alkali metal. It is also common to crystallize bicarbonates by controlled cooling of bicarbonate solutions, or by evaporating the solvent of such solutions.

For the industrial use of alkali metal bicarbonate particles control of specific properties of the particles, e.g. their bulk density (poured bulk density) or angle of repose is required.

Some methods to control these parameters, such as a bulk density are known in the art. E.g. US 5,411,750 discloses a method of producing sodium bicarbonate powder with a bulk density between 70 and 500 kg/m³. The particles are prepared by spray-drying a dilute aqueous solution of the bicarbonate with an alkali metal salt as additive.

WO 2014/096457 discloses a method for producing sodium bicarbonate particles by spray-drying of an aqueous solution comprising 1 - 10 % by weight of sodium bicarbonate and an additive selected from the group consisting of magnesium salt, sodium alkyl benzene sulfonat and soybean lecithin.

While the alkali metal bicarbonate particles produced by spray-drying are generally fine particles, they tend to agglomerate easily and rapidly in a short period of time. Further, while their spherical shape helps improving the flowability, there is still the need for powder compositions comprising alkali metal bicarbonate particles and methods for the preparation thereof, which do not shows the above disadvantages, and in particular show improved flowability, as well as high bulk density and an increased duration of dissolution.

### Brief summary of the invention

It has been surprisingly found that when amino acids are used as additive during preparation of alkali metal bicarbonate particles, in particular by spray-drying, the obtained particles show an excellent flowability, as well as high bulk density and an increased duration of dissolution.

The present invention therefore relates to a powder composition comprising particles, which particles comprise at least 75 % by weight of an alkali metal bicarbonate, less than 15 % by weight of an alkali metal carbonate, less than 20 % by weight of water, and 0.02 to 10 % by weight of an amino acid or a salt thereof.

It also relates to a process for preparing alkali metal bicarbonate particles by spray-drying of an aqueous solution comprising 1 to 10 % by weight of the alkali metal bicarbonate and 1 to 10,000 ppm of an amino acid or salt thereof.

The present invention also relates to the use of an amino acid as additive for reducing the angle of repose, increasing the bulk density and/or increasing the dissolution time of alkali metal bicarbonate particles.

### Brief description of the drawings

Fig. 1: Scanning electron microscope view of sodium bicarbonate particles for reference without additive.
Fig. 2: Scanning electron microscope view of sodium bicarbonate particles with 1,000 mg leucine pro kilogram solution as spray dried (1,000 ppm additive).

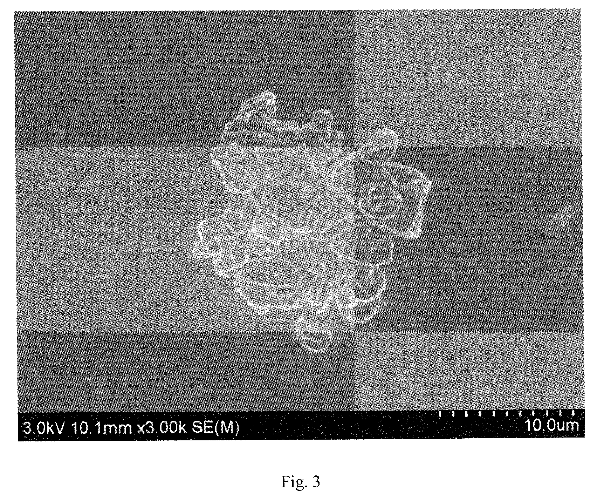

Fig. 3: Scanning electron microscope view of sodium bicarbonate particles with 5,000 mg leucine pro kilogram solution as spray dried (5,000 ppm additive).
Fig. 4: Scanning electron microscope view of sodium bicarbonate particles with 1,000 mg leucine pro kilogram solution as spray dried (1,000 ppm additive).

### Definitions

In the present description, wherein an element or composition is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components.

Further, it should be understood that elements and/or features of an apparatus, a process or method described herein can be combined in a variety of ways without departing from the scope and disclosures of the present teachings, whether explicit or implicit herein.

As used herein, the term "about" refers to a ±10 % variation from the normal value unless specifically stated otherwise.

The term "comprising" includes "consisting essentially of" and "consisting of".

The term "ppm" means parts per million, expressed by weight (e.g. 1 ppm = 1 mg / kg).

The sign "%" refers to "weight percent" unless specifically stated otherwise.

As used herein "in spherical shape" refers to particles with shape on an electron scanning microscope has an ovoid shape with larger diameter to smaller diameter ratio of less than 1.4.

The chemical terms herein are used according the IUPAC standard as generally applied. In particular, with regard to an amino acid the terminology used is according the IUPAC recommendations 1983 as published in Pure & Applied Chemistry, volume 56, no. 5, pages 595 to 624, 1984.

As used herein "bulk density" refers to loose bulk density and can be determined according to ASTM D7481-09 "method A" unless specifically stated otherwise. Tapped density can also be determined according to ASTM D7481-09 "method A" unless specifically stated otherwise.

As used herein "angle of repose" is the critical angle of repose as known in the art of a granular material, i.e. the steepest angle of descent or dip relative to the horizontal plate to which a material can be piled without slumping. The angle of repose can be determined in accordance with DIN EN ISO 6168 unless specifically stated otherwise.

As used herein "dissolution time" is measured with a conductivity meter diving cell in a beaker stirred with 1 liter (1000ml ± 1g) deionized water at 25°C ± 0.5°C. The stirring speed is 350 rpm, the geometry of the stirrer (4 blades) is: height 11 mm, diameter 42 mm. The beaker has a diameter of 100 mm. The gap between the blades and the bottom of the beaker is 10 mm. The conductivity meter is positioned at 40 mm of the stirrer axis and 20 mm under the liquid surface. 10 g ± 0.05 g of the particles, e.g. the alkali metal bicarbonate particles, are introduced into the solution. Upon dissolution, the conductivity of the solution increases. The "dissolution time" is the time (starting with introduction of the particles into the solution) required to reach 95 % of the final value of the conductivity upon complete dissolution of the particles.

### Detailed description of the invention

The present invention relates to a powder composition comprising alkali metal bicarbonate particles. The alkali metal is preferably sodium or potassium, in particular sodium. The particles comprise at least 75 % by weight of an alkali metal bicarbonate, preferably at least 78 % by weight, more preferably at least 80 % by weight, in particular at least 82 % by weight of the alkali metal bicarbonate, in particular sodium bicarbonate. The particles comprise less than 15 % by weight of the alkali metal carbonate, i.e. the corresponding alkali metal carbonate of the alkali metal bicarbonate. That is, if the preferred alkali bicarbonate is sodium bicarbonate (NaHCO₃) or potassium bicarbonate (KHCO₃), the alkali carbonate is sodium carbonate (Na₂CO₃) or potassium carbonate (K₂CO₃), respectively. Preferably, the content of alkali metal carbonate in the particles is at most 14 % by weight, in particular at most 13 % by weight of the alkali metal carbonate. Further, the particles comprise less than 20 % by weight of water, preferably less than 15 %, more preferred less than 10 %, in particular less than 5 % by weight of water.

The powder composition of the present invention comprises particles which particles comprise 0.02 - 10 % by weight of an amino acid or a salt thereof as additive. Generally, the amino acids are compounds as known in the art composed of an amino group and a carboxylic acid functional group. An amino group is, in accordance with IUPAC nomenclature a compound formally derived from ammonia (NH₃) by replacing one, two or three hydrogen atoms by hydrocarbyl groups, and having the general structures RNH₂ (primary amines), R₂NH (secondary amines) or R₃N (tertiary amines). In accordance with IUPAC nomenclature, derivatives of ammonium compounds (NH₄⁺)Y⁻ in which all four of the hydrogens bonded to the nitrogen have been replaced with hydrocarbyl groups, are considered as quaternary ammonium compounds which are not amines. That is, in the amino acids as used in accordance with the present invention the amine group, preferably the α-amine group, is a RNH₂, R₂NH or R₃N residue but not an NR₄⁺ residue. Preferably, quaternary ammonium compounds comprising a carboxylic acid group are not used as amino acids in accordance with the present invention.

In a preferred embodiment of the invention, the amino acid is a β-amino acid or an α-amino acid, most preferred an α-amino acid. α-amino acids generally have a chemical structure according to formula (I) 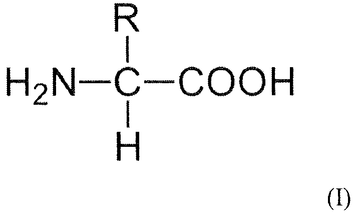 or a salt thereof. Residue R may be hydrogen, or an alkyl or an optionally substituted aryl or an optionally substituted heteroaryl group. Preferably, residue R is a C₁ - C₁₀ alkyl group, in particular a C₁ - C₆ alkyl group. Most preferably R is a methyl, propan-2-yl (isopropyl), butan-2-yl, or 2-methyl-propan-1-yl.

In a preferred embodiment, the α-amino acid is selected from the group consisting of positively charged amino acids, such as arginine, histidine, and lysine, negatively charged amino acids such as aspartic acid or glutamic acid, polar uncharged amino acids such as serine, threonine, asparagine or glutamine, or cysteine, selenocysteine, glycine and proline. Particular preferred are amino acids with hydrophobic side chain, such as alanine, valine, isoleucine, leucine, methionine, phenylalanine, tyrosine and tryptophan. Most preferred are valine, isoleucine and leucine, leucine being most preferred.

α-amino acids are chiral compounds. Generally, both racemic mixtures of the both enantiomeres can be used, as well as compositions enriched in one enantiomer, e.g. the D- or the L-enantiomer. Preferably, racemic mixtures of the amino acids are used in accordance with the present invention.

The amino acid should be present in the particles of the invention in the amount of at least 0.02 % by weight, preferably at least 0.05 % by weight, in particular at most 0.1 % by weight. More than 10 % by weight of the amino acid is disadvantageous for cost reasons. Preferably, at most 8 % by weight, more preferably at most 6 % by weight, in particular at most 5 % by weight of the amino acid are present in the particles in accordance with the present invention.

The particles of the present invention surprisingly show excellent flowability as proven in very low angles of repose. Typically, the powder composition comprising the particles of the present invention have an angle of repose of between 15° and 30°, preferably between 15° and 25°, in particular between 15° and 20°. That is, if the powder is poured onto a surface the particles are free flowing and spread into very flat cones. As comparison, alkali metal bicarbonate, for example sodium bicarbonate particles, obtained by similar processes without the addition of the amino acid as additive, or when sodium chloride is added as additive, show an angle of repose of above 60°. The latter indicates that these comparative particles show significant agglomeration under comparative conditions in contrast to the particles of the present invention.

Furthermore, the alkyl metal bicarbonate particles of the invention have advantageous properties, such as a low particle size preferably with a low span. The span of the particle size distribution is as known in the art defined as the ratio (D₉₀ - D₁₀) / D₅₀. Preferably the span is lower than 1.8, more preferably at most 1.7 in particular at most 1.6, e.g. at most 1.5. Preferably, the particles have a particle size distribution of D₅₀ of at most 25 µm. The D₅₀ term is designating the diameter for which 50 % by weight of the particles have a diameter less than or equal to D₅₀ (weight average diameter). The D₁₀ term is designating the diameter for which 10 % by weight of the particles have a diameter less than or equal to D₁₀. The D₉₀ term is designating the diameter for which 90 % by weight of the particles have a diameter less or equal to D₉₀.

Preferably, the particles have a D₁₀ in the range of 4 µm - 8 µm, in particular 5 µm - 6 µm.

The weight-average diameter D₅₀, as well as D₁₀ and D₉₀ values are measured by laser diffraction and scattering on a Malvern Mastersizer S particle size analyser using an He-Ne laser source having a wavelength of 632.8 nm and a diameter of 18 mm, a measurement cell equipped with a backscatter 300 mm lens (300 RF), and MS 17 liquid preparation unit, and an automatic solvent filtration kit ("ethanol kit") using ethanol saturated with bicarbonate (wet method).

Furthermore, the alkyl metal bicarbonate particles of the invention show high bulk densities of typically at least 300 kg/m³, preferably at least 350 kg/m³, in particular at least 400 kg/m³. Furthermore, the particles show tapped densities typically above 400 kg/m³, preferably at least 450 kg/m³, in particular at least 500 kg/m³.

The particles of the powder according to the present invention furthermore show an increased dissolution time compared to particles which do not comprise the amino acid as additive. While the latter particles show a dissolution time of about 8 seconds, the particles according to the present invention show a dissolution time of typically at least 30 seconds, preferably at least 40 seconds, in particular at least 45 seconds. An increased dissolution time is advantageous and desired for some uses of the alkali metal bicarbonates as known in the art.

Preferably the particles of the powder according to the present invention are in spherical shape.

The particles of the present invention are obtainable by spray-drying solutions of alkali metal carbonates and amino acid, in particular by processes as described below.

The present invention further relates to a process for preparing alkali metal bicarbonate particles, preferably the alkali metal bicarbonate particles as described above according to invention, by spray-drying. Spray-drying or drying by atomization is a drying technique. This method comprises spraying the product to be dried, which is in the form of a solution (or a suspension) in a stream of hot gas, so as to obtain a powder in a few seconds or fractions of seconds. The separation of a solution into fine droplets gives rise to a large material transfer surface and it leads to rapid evaporation of the solvent of the solution used.

Suitable apparatuses for spray-drying are known in the art, and generally comprise several modules: a module comprising a circuit for storing and atomizing the solution comprising equipments for atomizing or spraying the solution, a module for the preparation of hot gas and its transfer to a drying chamber where it comes into contact with the sprayed solution, a drying chamber where the sprayed solution is evaporated and the particles are formed, and a module for collecting the particles, generally comprising a cyclone and/or a suitable filter.

Generally, the equipment for atomizing or spraying the solution is a compressed gas sprayer or a dispersion turbine. Also ultrasound nozzles can be used for spraying the solution.

In the process of the invention generally an aqueous solution of the bicarbonate is used. While other polar solvents or mixtures of polar solvents, for examples mixtures of water and ethanol, in which the additive is soluble, may be used, water is the preferred solvent.

In the method of the present invention the aqueous solution to be spray-dried comprises 1 to 10 % by weight of the alkali metal bicarbonate. The alkali metal bicarbonate is preferably one of those as described above for the particles of the present invention. The solution to be spray-dried further comprises 1 to 10,000 ppm of an amino acid or salt thereof. The amino acid used is preferably one of those as described above for the particles of the present invention. In preferred embodiments, the content of the amino acid in the solution to be spray-dried is 1 to 5,000 ppm, more preferred 1 to 3,000 ppm, in particular 10 to 2,000 ppm, e.g. 50 - 1,000 ppm of additive per kg of solution to be spray-dried. Generally, the aqueous solution comprises at least 1 mg, preferably at least 5 mg, more preferably at least 10 mg, even more preferred at least 100 mg of the additive per kg of aqueous solution. Generally, the aqueous solution comprises at most 2,000 mg, preferably at most 1,500 mg, more preferably at most 1,200 mg of the additive per kg of aqueous solution. In case of salts, weight percentages are given based on the free base / acid.

Generally, in the process of the invention the aqueous solution comprises at least or more than 1 %, preferably at least or more than 2 %, more preferably at least or more than 3 %; even more preferably at least or more than 4 %, in particular at least or more than 5 % by weight of alkali metal bicarbonate. Preferably the alkali metal bicarbonate is sodium bicarbonate or potassium bicarbonate, in particular sodium bicarbonate. A high concentration of alkali metal bicarbonate in the aqueous solution is detrimental as leading to high speed plugging of the spraying or atomizing device. Therefore it is generally recommended that the aqueous solution comprises at most or less than 10 %, preferably at most or less than 8 %, more preferably at most or less than 6 % of alkali metal bicarbonate, in particular sodium bicarbonate. Preferably, the alkali metal bicarbonate solution is an aqueous solution comprising 1 % - 10 %, advantageously 3 % - 8 %, more advantageously 4 % - 6 % per weight of the alkali metal bicarbonate.

The drying with a hot gas breaks part of the alkali metal bicarbonate down into the form of sodium carbonate, CO₂ and water. In one advantageous embodiment of the present invention, the spray-drying is carried out in a gas comprising at least 5 %, advantageously at least 10 %, more advantageously at least 20 %, and even more advantageously at least 30 % of CO₂ by volume on a dry gas bases. This enables to limit the alkali metal bicarbonate decomposition into alkali metal carbonate solid and CO₂ and water gasses. Generally, the spray-drying is carried out with a gas preheated between 40°C and 220°C. Advantageously the spray-drying is carried out in a spray-drying chamber and wherein the gas is preheated before being introduced into the spray-drying chamber at at least 40°C, preferably at at least 50°C, more preferably at at least 60°C, even more preferably at at least 70°C. Also advantageously, the gas is preheated before being introduced into the spray-drying chamber at at most 220°C, preferably at at most 200°C, more preferably at at most 180°C, even more preferably at at most 130°C.

It is preferable for the temperature of the gas after the spray-drying operation to be at most 80°C, advantageously at most 70°C and more advantageously at most 60°C.

In one embodiment of the invention, the aqueous solution is preheated to a temperature of at least 20°C and preferably at at most 80°C before being sprayed during the spray-drying operation. In one particular embodiment, the aqueous solution is preheated to a temperature of at least 20°C and at most 25°C before being sprayed during the spray-drying operation.

The invention also relates to the alkali metal bicarbonate particles obtainable by the method according to the present invention. The particles obtainable by the method of the invention show the above advantageous properties as described above, in particular an angle of repose of between 15° and 30° and/or a bulk density of at least 300 kg/m³, preferably at least 400 kg/m³.

The present invention also relates to the use of an amino acid, in particular as defined above, as additive for reducing the angle of repose and/or increasing the dissolution time and/or increasing the bulk density of alkali metal bicarbonate particles, in particular those as described above and as obtainable by a process according to the present invention.

These advantageous properties of the particles as described above and as obtainable by the process of the invention make it possible to envisage various applications for these alkali metal bicarbonate particles. Possible applications include as blowing or foaming agent for polymers, as an exfoliating agent (health care), as anti-parasitic agent, as a deodorizing agent, and as an inhalation agent.

The following examples are given by way of non-limiting illustration of the present invention, and variations thereof that are readily accessible to a person skilled in the art.

### Examples

The following examples 1 and 2 were carried out with a BUCHI laboratory spray-dryer, model B-191.

The operating conditions of the apparatus are given in Table 1.

**Table 1 - characteristics of used spray dryer**

| **Parameter** | **Operating conditions** |
|---|---|
| Temperature of entering drying air | 20-220°C |
| Flow rate of atomization compressed air | 400-800 l/h at 25°C |
| Flow rate of entering air | 24-45 m³/h at 25°C |
| Flow rate of solution | Up to 27.8 g/min at 25°C |
| Solute concentration | Solution saturated or unsaturated |
| Solution temperature | 20-80°C |
| Type of solute | NaHCO₃ or Na₂CO₃ |
| Additives | With or without (reference test) |
| Type of additive | Leucine |
| Additive concentration | 1,000 ppm, 5,000 ppm |
| [CO₂] | 0-76 vol% in the drying gas |

### Example 1 (comparative): Atomization tests without additive on Büchi B-191 lab spray-dryer:

### Test conditions are reproduced in Table 2.

### Table 2 - Reference test without additive

| **Parameter** | **Value** |
|---|---|
| Flow rate of drying air | 24 m³/h at 20°C |
| Temperature of exiting air | 60°C |
| Flow rate of solution | 4.2 g/min |
| NaHCO₃ concentration | 50 g/kg solution |
| Solution temperature | 20-25°C |
| Temperature of drying air | 95+/-3°C |
| Flow rate of atomization compressed air | 600 l/h at 20°C |

Sodium bicarbonate particles were obtained with the specific characteristics
- BET specific surface: 2.0 - 2.7 m²/g (+/- 0.3)
- Diameter D50: 10 - 11 µm (-)
- Bulk density: 170 - 255 kg/m³ (-)
- NaHCO₃ content in powder ≥ 90 wt.%
- H₂O content in powder ≤ 3 wt.%
- Na₂CO₃ content in powder: ≤ 7 wt.% (+/-1%)
- Angle of repose 66°

The weight-average diameter (D50) is measured by laser diffraction and scattering on a Malvern Mastersizer S particle size analyzer using an He-Ne laser source having a wavelength of 632.8 nm and a diameter of 18 mm, a measurement cell equipped with a backscatter 300 mm lens (300 RF), and MS 17 liquid preparation unit, and an automatic solvent filtration kit ("ethanol kit") using ethanol saturated with bicarbonate.

The BET (Brunauer, Emmett and Teller) specific surface was measured on a Micrometics Gemini 2360 BET analyzer using nitrogen as adsorptive gas. The measure was realized on a powder sample presenting at least 1 m² of developed BET area, and was preliminary degassed with helium gas during 5 hours at ambient temperature (20 to 25°C) in order to get rid of humidity traces absorbed on the powder of sodium bicarbonate particles.

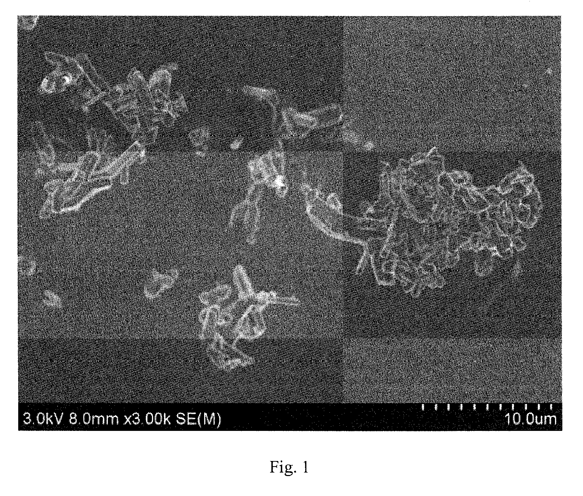

Fig. 1 shows a scanning microscope view of the sodium bicarbonate particles obtained for the reference test without additive. As it can be seen from the Figure, the particles obtained from spray-drying without additive are in the form of needles and agglomerates, with no or less than 10 % spheres. The powder shows disadvantageous flowability values.

### Example 2

Tests with 1,000 ppm of leucine as additive.

The operating conditions were the same to those of Example 1, but with 1,000 ppm of leucine in the sprayed solution.

Sodium bicarbonate particles were obtained with the following specific characteristics:
- BET specific surface area: 5.4 - 7.5 m²/g
- Diameter D50: 4 - 8 µm
- Bulk density: 302 - 435 kg/m³
- NaHCO₃ content: ≥76 wt.%
- H₂O content: ≤ 20 wt.%
- Na₂CO₃ content: ≤ 7 wt.%

The powder obtained showed excellent fluidity, and the obtained particles were of substantial spherical shape

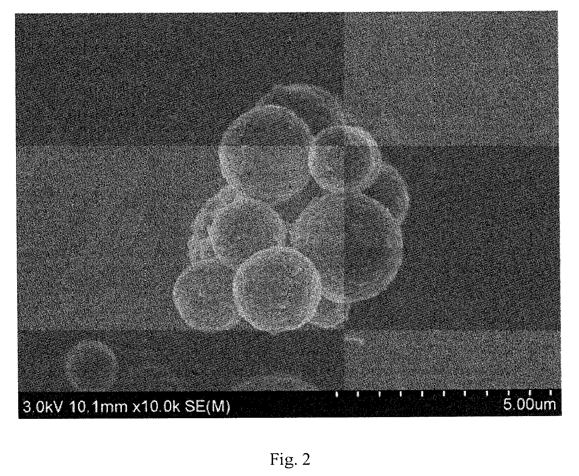

Fig. 2 shows a scanning microscope view of the sodium bicarbonate particles thus obtained with leucine additive.

### Example 3

In this example spray-drying has been tested at a larger scale. The air preheater consisted of four stages allowing heating the air up to 300°C. The liquid was sprayed through a rotating atomizer (8 holes; 20,000 rpm). Spray-drying chamber consisted of an upper cylinder of an internal diameter of a 1,200 mm and a total height of about 2 times the internal diameter, and a cone at the bottom of the cylinder, with an angle of 60°. The dried powder was recovered at the underflow of a cyclone (with cutoff size of about 2 µm) separating the wet air from the powder. The operating conditions of the apparatus are given in table 3:

**Table 3 - characteristics of used spray dryer**

| **Parameter** | **Operating conditions** |
|---|---|
| Temperature of the drying air | 300°C |
| Temperature of exiting wet air | 70°C |
| Flow rate of solution | 20 kg/h |
| NaHCO₃ concentration in the solution | 75 g/kg |
| Solution temperature | About 20°C |
| Type of additive | Leucine |
| Additive concentration | 1,000 ppm |

Sodium bicarbonate particles were obtained with the following specific characteristics:
- BET specific surface area: 3.3 m²/g
- Diameter D50: 19 µm
- Bulk density: 425 kg/m³
- NaHCO₃ content: 82 wt.%
- H₂O content: 5 wt.%
- Na₂CO₃ content: 13 wt.%
- Angle of repose: 18°
- Dissolution time 47 seconds

The powder obtained showed excellent fluidity, as shown by the very low angle of repose of 18° and the obtained particles were of substantial spherical shape.

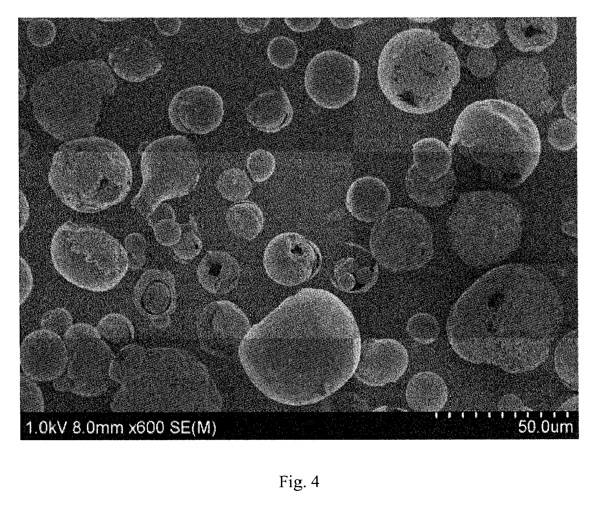

Figure 4 shows scanning microscope view of the sodium bicarbonate particles thus obtained with Leucine additive.

## Claims

1. Powder composition comprising particles, which particles comprise at least 75 % by weight of an alkali metal bicarbonate,
less than 15 % by weight of an alkali metal carbonate,
less than 20 % by weight of water, and
0.02 to 10 % by weight of an amino acid or a salt thereof.

2. Powder composition according to claim 1, wherein the amino acid is an α-amino acid, preferably with a hydrophobic side chain.

3. Powder composition according to claim 1 or 2, wherein the amino acid is an α-amino acid according to formula (I) 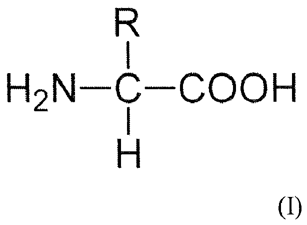 or a salt thereof, wherein R is hydrogen, or an alkyl, or an optionally substituted aryl or an optionally substituted heteroaryl group, preferably a C1 to C6 alkyl group.

4. Powder composition according to any one of the preceding claims, wherein the particles have a particle size distribution of D₅₀ of at most 25 µm.

5. Powder composition according to any one of the preceding claims, wherein the particle size distribution of the particles show a span, which is defined by span = (D₉₀ - D₁₀) / D₅₀, of lower than 1.8.

6. Powder composition according to any one of the preceding claims, having an angle of repose of between 15° and 30°.

7. Powder composition according to any one of the preceding claims, having a bulk density of at least 300 kg/m³, preferably at least 400 kg/km³.

8. Process for preparing alkali metal bicarbonate particles by spray-drying of an aqueous solution comprising 1 to 10 % by weight of the alkali metal bicarbonate and 1 to 10000 ppm of an amino acid or a salt thereof.

9. Process for preparing alkali metal bicarbonate particles according to claim 8, wherein the amino acid is an α-amino acid, preferably with a hydrophobic side chain.

10. Process for preparing alkali metal bicarbonate particles according to claim 8 or 9, wherein the amino acid is an α-amino acid according to formula (I) 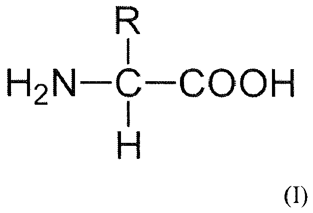 wherein R is hydrogen, or an alkyl, or an optionally substituted aryl or an optionally substituted heteroaryl group, preferably a C1 to C6 alkyl group.

11. Process for preparing alkali metal bicarbonate particles according to any one of claims 8 to 10, wherein the particles have a particle size distribution of D₅₀ of at most 25 µm.

12. Process for preparing alkali metal bicarbonate particles according to any one of claims 8 to 11, the particle size distribution of the particles show a span, which is defined by span = (D₉₀ - D₁₀) / D₅₀, of lower than 1.8.

13. Powder composition comprising particles comprising an alkali metal bicarbonate, which particles are obtainable by a process according to any one of claims 8 to 12.

14. Powder composition comprising particles comprising an alkali metal bicarbonate according to claim 13, having an angle of repose of between 15° and 30° and / or a bulk density of at least 300 kg/m³, preferably at least 400 kg/km³.

15. Use of an amino acid as additive for reducing the angle of repose, increasing the bulk density and/or increasing the dissolution time of alkali metal bicarbonate particles.
